(19) Europäisches Patentamt
European Patent Office
Office européen des brevets

(11) EP 1 061 050 A1

# (12) EUROPEAN PATENT APPLICATION

(43) Date of publication:
**20.12.2000 Bulletin 2000/51**

(51) Int. Cl.[7]: **C03B 8/02**, C03C 1/00

(21) Application number: **00304772.7**

(22) Date of filing: **06.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.06.1999 US 335075**

(71) Applicant:
**LUCENT TECHNOLOGIES INC.**
**Murray Hill, New Jersey 07974-0636 (US)**

(72) Inventors:
- **Cauda, Michael J.**
  **Ramsey, New Jersey 07446 (US)**
- **Taylor-Smith, Ralph E.**
  **Dunellen, New Jersey 08812 (US)**
- **Valdes, Jorge Luis**
  **Branchburg, NJ 08876, New Jersey 07921 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

## (54) Process for fabricating an article via sol-gel processing

(57) The invention allows attainment of low carbon concentrations in sol-gel bodies by less rigorous burn-out techniques than required for typical sol-gel formulations. Useful silica bodies, e.g., overcladding tubes, are formed from a sol containing a low molecular weight (<2000) organic surfactant as opposed to a higher molecular weight binder. The surfactant appears to serve the same purpose as such binders, but the smaller molecules of the surfactant ease removal upon heating. Thus, even if the surfactant is present in a weight ratio equivalent to that used for higher molecular weight polymeric additives, the surfactant is nonetheless more easily removed.

EP 1 061 050 A1

## Description

### BACKGROUND OF THE INVENTION

### Field of the Invention

The invention relates to silica sol-gel processing methods.

### Discussion of the Related Art

Glass optical fiber is typically drawn from a solid preform containing an overcladding that surrounds an inner cladding and core. An overcladding tube is generally formed separately from the inner cladding and core, and the components are then brought together to make the preform. The overcladding does not have to meet the demanding purity and uniformity specifications of the core and inner cladding, and some efforts at lowering the cost of optical fiber manufacturing processes have therefore focused on the overcladding. These efforts have led to the use of sol-gel processes to form overcladding tubes.

Co-assigned U.S. Patent No. 5,240,488 (the '488 patent), the disclosure of which is hereby incorporated by reference, discloses a sol-gel process for production of overcladding tubes. In the process, an aqueous colloidal silica dispersion is used. The dispersion is typically stabilized by addition of a base such as tetramethylsammonium hydroxide (TMAH). TMAH is believed to stabilize silica particles by the following mechanism: Introduction of the TMAH solution into a silica dispersion raises the pH value. The silica then takes on a negative surface charge due to ionization of silanol groups present on the surface, in accordance with the following reaction:

$$-Si\text{-}OH + OH^- \rightarrow -Si\text{-}O^- + H_2O.$$

The negative charge on the silica particles creates mutual repulsion, preventing substantial agglomeration and maintaining the stability of the dispersion. A pH of about 10 to 14 is indicated to be required.

At a later stage in the process, as discussed at Col. 15, lines 39-65 of the '488 patent, a gelling agent such as methyl formate is added to reduce the pH. The methyl formate, through reaction with water and/or base, neutralizes the negatively-charged silica to a degree where gelation is induced, i.e., reduces the zeta potential to near-zero. (Zeta potential is the potential across the diffuse layer of ions surrounding a charged colloidal particle, and is typically measured from electrophoretic mobilities - the rate at which colloidal particles travel between charged electrodes placed in a solution. A negative or positive zeta potential indicates some repulsion between particles. Gelation, as used herein, indicates that the colloidal silica particles have formed a three-dimensional network with some interstitial liquid, such that the dispersion becomes essentially non-flowing, e.g., exhibiting solid-like behavior, at room temperature.)

According to the '488 patent, large, crack-free silica bodies are capable of being formed by such a process largely due to inclusion of a polymer additive referred to as binder. The polymeric binder advantageously has numerous characteristics, as set forth in the patent, with typical binders exhibiting, among other things, a molecular weight of 10,000 to 100,000. Polyethyloxazoline is disclosed as one polymer effective in promoting crack-free bodies.

The process of the '488 patent provides silica bodies useful for a variety of applications, particularly formation of overcladding tubes for optical fiber preforms. Further advances in sol-gel processes are continually being sought, however.

### SUMMARY OF THE INVENTION

The invention provides an improvement over the process disclosed in the '488 patent. Specifically, the invention involves sol-gel fabrication in which a low molecular weight surfactant is used in place of the polymeric binder disclosed in the '488 patent.

Based on advancements in the understanding of optical fiber fabrication, it has been discovered that carbon concentrations in optical fiber preforms are desirably kept extremely low. Removal of organics by thermal decomposition is currently performed in sol-gel processes, as reflected at Col. 16, lines 39-45 of the '488 patent. Standard organic burn-out processes are not always sufficient to reach the desired carbon concentrations, primarily due to the difficulty of removing high molecular weight (>10,000) polymers. Yet, more rigorous removal techniques, e.g., greater time and/or temperature, tend to unacceptably reduce efficiency due to the attendant increase in time, energy, and thus cost of the manufacturing process. Those in the art, however, have been substantially unable to form crack-free, large bodies suitable for overcladding tubes without such high molecular weight additives.

The invention overcomes these problems, allowing attainment of the requisite low carbon concentrations (e.g., less than 300 ppm by mass) by less rigorous burn-out techniques than required for typical sol-gel formulations.

According to the invention, useful silica bodies of at least 1 kg, e.g., overcladding tubes, are formed from a sol containing a low molecular weight (<2000) organic surfactant as opposed to a higher molecular weight binder. The surfactant appears to serve the same purpose as such binders, but the smaller molecules of the surfactant tend to decompose at lower temperatures, thereby easing removal upon heating. Thus, even if the surfactant is present in a weight ratio equivalent to that used for higher molecular weight polymeric additives, the surfactant is nonetheless more easily removed, thereby leading to a lower-cost process.

## BRIEF DESCRIPTION OF THE DRAWINGS

Fig. 1 illustrates thermogravimetric analysis of decomposition of low-molecular weight surfactants of the invention versus a high molecular weight binder.

## DETAILED DESCRIPTION OF THE INVENTION

The invention involves fabrication of an article, e.g., silica optical fiber. The process of the invention involves the steps of providing a silica sol, inducing gelation of the sol into a gel body, and sintering the gel body. The silica sol comprises an organic surfactant, having a molecular weight less than 2000, optionally less than 1000, the sol also being substantially free of any organic polymeric material having molecular weight greater than 10,000. (Surfactant indicates an amphiphillic surface-active agent. Organic indicates a carbon-based compound. Substantially free indicates no measurable amount.)

The basic steps of the invention are similar to those presented in U.S. Patent No. 5,240,488, discussed above. According to one embodiment of the invention, therefore, an aqueous stabilized silica dispersion, or sol, is provided. The sol typically contains about 30 to about 75 wt.% silica, advantageously about 40 to about 65 wt.% silica, with the surface area of the silica generally ranging from 5 to 100 $m^2/g$. The dispersion is stabilized by conventional methods, typically at a pH of about 10 to about 13. Stabilization is generally provided by adding tetramethylammonium hydroxide (TMAH), although other organic bases, including other tetraalkylammonium hydroxides or amines, are also suitable.

According to the invention, the silica sol contains an organic surfactant having a molecular weight less than 2000. The surfactant contributes to maintaining crack-free bodies during subsequent drying of the gel bodies, and is typically present in the sol in an amount up to about 5 wt.%, based on the weight of the sol.

Typically, the organic surfactant is a non-ionic surfactant. It is also contemplated to use a non-metal cationic surfactant, i.e., where the cation is not alkali or alkali earth metal. An example of such a cationic surfactant is a compound in which the cation is a quaternary ammonium. Useful surfactants include:

- Polyoxyethylene sorbitan esters (available commercially as the Tween® family of surfactants sold by ICI Surfactants):

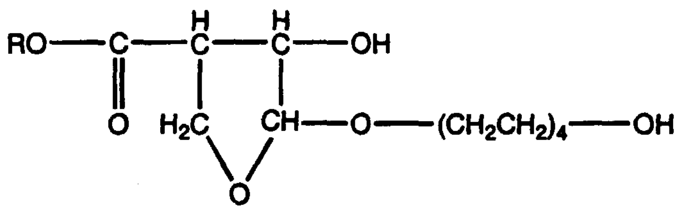

where R is a group such as laurate, palmitate, stearate, or oleate. Specific examples are polyoxyethylene(20) sorbitan monolaurate (Tween® 20), polyoxyethylene(20) sorbitan monopalmitate (Tween® 40), polyoxyethylene(20) sorbitan monostearate (Tween® 60), polyoxyethylene(20) sorbitan monooleate (Tween® 85);

- Sorbitan fatty acid esters (available commercially as the Span® family of surfactants sold by ICI Surfactants):

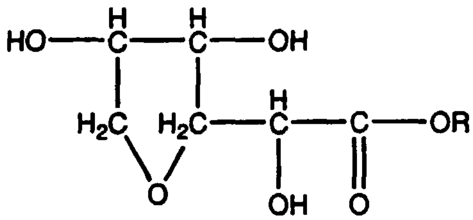

where R is a group such as laurate, palmitate, stearate, or oleate. Specific examples include sorbitan monolaurate (Span®20), sorbitan monopalmitate (Span® 40), sorbitan monostearate (Span® 60), sorbitan monooleate (Span® 80), and sorbitan sesquiolate (Span®83);

- Polyoxyethylene alcohols (available commercially as the Brij® family of surfactants sold by ICI Surfactants), e.g.,

  $C_{12}H_{25}(OCH_2CH_2)_4OH$ (polyoxyethylene(4)lauryl ether - Brij® 30);
  $C_{16}H_{33}(OCH_2CH_2)_{10}OH$ (polyoxyethylene(10)cetyl ether - Brij® 56);
  $C_{18}H_{37}(OCH_2CH_2)_2OH$ (polyoxyethylene(2)stearyl ether - Brij® 72);
  $C_{18}H_{35}(OCH_2CH_2)_2OH$ (polyoxyethylene(2)oleyl ether - Brij® 92);
  $C_{18}H_{35}(OCH_2CH_2)_{20}OH$ (polyoxyethylene(20)oleyl ether - Brij® 98);

- Alkyl-substituted phenylether-polyethylene oxide ethanol (available commercially as the Igepal® family from Surfactants, Inc.)

- phosphate esters (e.g., those available commercially as the Rhodafac® family available from Rhodia), e.g., polyoxyethylene nonylphenylether phosphate

Use of specific compounds within these groups is reflected in the Examples below. Typical surfactants contain carbon, hydrogen, oxygen, and/or nitrogen atoms. However, other surfactants offering similar properties, and optionally containing additional atoms, are also useful.

In addition to the surfactant, it is possible to include additional organic compounds, as long as such compounds do not exhibit molecular weights of 10,000 or higher. Such additional compounds include a surface modifier, as discussed at Col. 15 of the '488 patent. Glycerin is one example of a suitable surface modifier. It is also possible to include a defoaming agent to reduce air take-in, with 2-octanol being one such agent.

The sol is typically aged, e.g., for up to about 20 hours, to adequately dissolve the silica and optionally centrifuged to remove contaminants. It is possible to age or centrifuge the sol prior to introducing the surfactant or other additives, and/or after introducing such additives.

As discussed above, a gelling agent is generally added to the sol to drop the pH of the sol to the gel point. The gelling agent is typically a water-soluble liquid that undergoes hydrolysis to consume base, e.g., an ester, amide, or halide, and thereby lowers the pH. The agent thereby neutralizes the negatively-charged silica to a degree where gelation is induced, i.e., reduces the zeta potential to near-zero. Methyl formate is a typical gelling agent.

In addition to the above fabrication steps, it is also possible to use the sol of the invention with a variety of sol-gel fabrication processes, e.g., processes that use different stabilizing and/or gelling techniques or compounds, or different additives.

After adding the gelling agent, the dispersion is typically transferred into a mold or an extruder, where it is allowed to gel. Gelling typically occurs over a time period less than one hour. Where the gel body is molded, the gel is then typically allowed to age in the mold for up to about 24 hours. For extrusion, the gel generally ages for a few hours or less. Aging provides a desirable rearrangement of particles, leading to better packing, expulsion of some liquid around the particles, and associated shrinkage of the gel in the mold - a process known as syneresis. Syneresis adds strength and, due to the shrinkage, eases removal from a mold. Once aged, the gel body is released from the mold, or extruded into the desired shape. The gel body is then dried, typically under relatively moderate conditions, e.g., temperature less than 40°C and relative humidity greater than 50%, until at least about 90 wt.% of the water has been driven off.

After drying, the body is then heat treated, as discussed in the '488 patent. The first stage of heat treatment generally removes water and burns out any organic material. The next stage is generally dehydroxylation to remove residual water. And then the body is generally sintered to a consolidated silica body. (The steps including burn-out, dehydroxylation, and sintering are referred to generally as thermal processing.) As reflected in the thermogravimetric

analysis presented in the examples below, the low molecular weight surfactants of the invention tend to provide easier burn-out than larger polymeric materials, such as the polyethyloxazoline polymeric additive of the '488 patent. Thus, the residual organics are able to be reduced to a desired level by a less rigorous heating regime, compared to conventional processes.

The process of the invention is useful for fabricating optical fiber. Specifically, it is possible for the gel body to be an overcladding tube for optical fiber preforms, as discussed in the '488 patent, or even a substrate tube. To obtain a finished preform, the overcladding tube is typically placed over a core rod, and the components are heated and collapsed into a solid, consolidated preform, as discussed in U.S. Patent No. 4,775,401, the disclosure of which is hereby incorporated by reference.

The core rod is fabricated by any of a variety of vapor deposition methods known to those skilled in the art, including vapor axial deposition (VAD), outside vapor deposition (OVD), and modified chemical vapor deposition (MCVD). MCVD is discussed in U.S. Patent Nos. 4,217,027; 4,262,035; and 4,909,816, the disclosures of which are hereby incorporated by reference. MCVD involves passing a high-purity gas, e.g., a mixture of gases containing silicon and germanium, through the interior of a silica tube (known as the substrate tube) while heating the outside of the tube with a traversing oxy-hydrogen torch. In the heated area of the tube, a gas phase reaction occurs that deposits particles on the tube wall. This deposit, which forms ahead of the torch, is sintered as the torch passes over it. The process is repeated in successive passes until the requisite quantity of silica and/or germanium-doped silica is deposited. Once deposition is complete, the body is heated to collapse the substrate tube and obtain a consolidated core rod in which the substrate tube constitutes the outer portion of the inner cladding material.

The preform is then placed into a draw furnace, and optical fiber is drawn as known in the art.

It is also possible to form other articles, e.g., planar waveguides, by applying the principles disclosed herein.

The invention will be further clarified by the following examples, which are intended to be exemplary.

<u>Example 1</u>

Overcladding tubes having diameters of about 4 inches were fabricated with two different surfactants:

- Tween® 20 (defined above); and
- Brij® 30 (defined above).

Fabrication of the tubes was as follows. A sol was formed from:

- 1100 g of a 46 wt.% aqueous silica dispersion containing sufficient tetramethylammonium hydroxide to provide a pH of about 9.9;
- 5.5 g glycerin;
- 52.8 g of 25 wt.% aqueous TMAH solution; and
- 1 wt.% of the surfactant (based on the weight of the overall sol.)

The sol was mixed for 10 minutes in a high shear mixer, and was aged overnight at 4°C. The sol was then centrifuged to remove impurities, filtered, and then de-aired. To the sol was added a gelling agent of (a) 100 g of methyl formate per 10 kg of sol, and (b) 11.6 g of 2-octanol per 100 g of methyl formate. After adding the gelling agent, the resulting mixture was mixed for one minute in a magnetic stirrer, and then placed into a mold.

After a time period of up to 24 hours, the tubes were then launched (in water). For each surfactant, the molds exhibited some syneresis, had good separation from the mold, were crack free with good finishes, and launched from the mold with no problems.

After conventional drying, dehydroxylation, and sintering, as discussed in U.S. Patent No. 5,240,488, the tubes exhibited clear glass and were crack-free.

<u>Example 2</u>

Conventional thermogravimetric analysis was performed to evaluate the heat-induced decomposition of low molecular weight surfactants Tween®20 (MW = 1228) and Brij®30 (MW = 362), as compared to high molecular weight polyethyloxazoline polymeric binder. Fig. 1 shows the results. It is clear that the low molecular weight surfactants offer easier decomposition. These results suggest that a less rigorous burn-out than conventional techniques will reach desirably low carbon concentrations.

Other embodiments of the invention will be apparent to those skilled in the art from consideration of the specification and practice of the invention disclosed herein.

**Claims**

1. A process for fabricating an article, comprising the steps of:

   providing a silica sol comprising an organic surfactant having a molecular weight less than 2000, the sol being substantially free of organic polymeric material having molecular weight of 10,000 or higher;
   inducing gelation of the sol into a gel body; and
   performing thermal processing on the body, the thermal processing including a step of sintering the body into glass.

2. The process of claim 1, wherein the organic surfactant has a molecular weight less than 1000.

3. The process of claim 1, wherein the organic surfactant is a non-ionic surfactant.

4. The process of claim 1, wherein the organic surfactant is a non-metal cationic surfactant.

5. The process of claim 1, wherein the surfactant is present in the sol in an amount up to about 5 wt.%.

6. The process of claim 1, wherein the surfactant comprises one or more compounds selected from the group consisting of polyoxyethylene sorbitan esters, sorbitan fatty acid esters, and polyoxyethylene alcohols.

7. The process of claim 1, wherein the surfactant consists of carbon, oxygen, and hydrogen atoms.

8. The process of claim 1, wherein the surfactant consists of carbon, oxygen, hydrogen, and nitrogen atoms.

9. The process of claim 1, wherein the sol further comprises one or more compounds selected from a stabilizing agent, a surface modifier, and a defoaming agent.

10. The process of claim 9, wherein the stabilizing agent comprises at least one of tetramethylammonium hydroxide and tetraethylammonium hydroxide.

11. The process of claim 9, wherein the surface modifier comprises glycerin.

12. The process of claim 9, wherein the defoaming agent comprises 2-octanol.

13. The process of claim 1, wherein the sintered gel body is an overcladding tube.

14. The process of claim 13, further comprising the steps of:

    forming an optical fiber preform comprising the overcladding tube; and
    drawing fiber from the preform.

15. The process of claim 1, wherein the sintered gel body comprises a planar waveguide.

16. The process of claim 1, wherein the sintered body has a weight of at least 1 kg.

*FIG. 1*

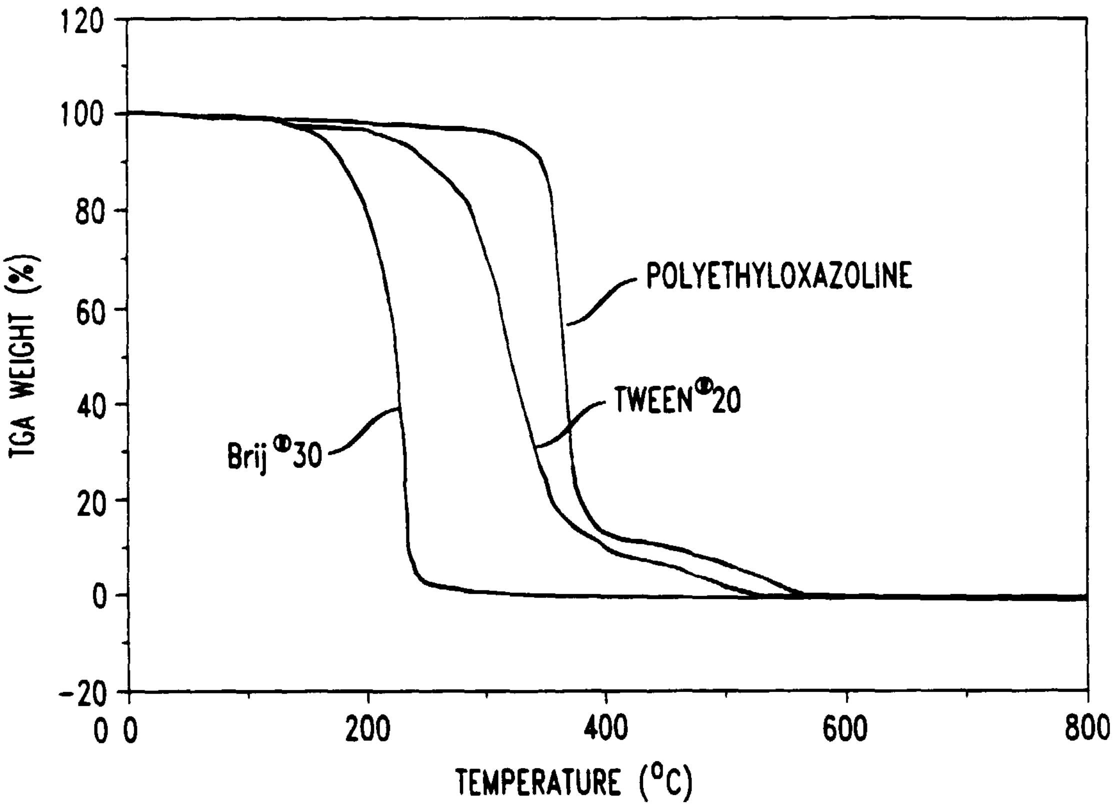
120
100
80
60
40
20
0
-20
TGA WEIGHT (%)
0 0
200
400
600
800
TEMPERATURE (°C)
POLYETHYLOXAZOLINE
TWEEN®20
Brij®30

European Patent Office

# EUROPEAN SEARCH REPORT

Application Number
EP 00 30 4772

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 300 610 A (AMERICAN TELEPHONE & TELEGRAPH) 25 January 1989 (1989-01-25)<br>* example VI *<br>--- | 1-16 | C03B8/02<br>C03C1/00 |
| X | SIMPKINS PETER G ET AL: "Drying behavior of colloidal silica gels"<br>J AM CERAM SOC;JOURNAL OF THE AMERICAN CERAMIC SOCIETY OCT 1989,<br>vol. 72, no. 10, October 1989 (1989-10), pages 1816-1821, XP002148516<br>* page 1820 *<br>--- | 1-16 | |
| X | NAKANISHI KAZUKI ET AL: "Designing double pore structure in alkoxy-derived silica incorporated with nonionic surfactant"<br>J POROUS MATER;JOURNAL OF POROUS MATERIALS MAY 1998 KLUWER ACADEMIC PUBLISHERS, DORDRECHT, NETHERLANDS,<br>vol. 5, no. 2, May 1998 (1998-05), pages 103-110, XP002148517<br>* page 103 - page 104 *<br>* page 109 *<br>--- | 1-16 | TECHNICAL FIELDS SEARCHED (Int.Cl.7) |
| X | JULBE A: "EFFECT OF NON-IONIC SURFACE ACTIVE AGENTS ON TEOS-DERIVED SOLS, GELS AND MATERIALS"<br>JOURNAL OF SOL-GEL SCIENCE AND TECHNOLOGY,NL,KLUWER ACADEMIC PUBLISHERS, DORDRECHT,<br>vol. 4, no. 2, 1995, pages 89-97, XP000497970<br>ISSN: 0928-0707<br>* page 89 - page 90 *<br>---<br>-/-- | 1-16 | C03C<br>C03B |

The present search report has been drawn up for all claims

| Place of search | Date of completion of the search | Examiner |
|---|---|---|
| THE HAGUE | 27 September 2000 | Van Bommel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 30 4772

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MURAKATA T ET AL: "Control of pore size distribution of silica gel through sol-gel process using inorganic salts and surfactants as additives" JOURNAL OF MATERIALS SCIENCE, 15 MARCH 1992, UK, vol. 27, no. 6, pages 1567-1574, XP002148518 ISSN: 0022-2461 * page 1567 * * page 1570 * --- | 1-16 | |
| X | US 4 943 542 A (HAYASHI FUSASHI ET AL) 24 July 1990 (1990-07-24) * column 1 - column 6 * --- | 1-16 | |
| X | PATENT ABSTRACTS OF JAPAN vol. 013, no. 221 (C-598), 23 May 1989 (1989-05-23) & JP 01 033021 A (NIPPON SHEET GLASS CO LTD), 2 February 1989 (1989-02-02) * abstract * --- | 1-16 | TECHNICAL FIELDS SEARCHED (Int.Cl.7) |
| X | PATENT ABSTRACTS OF JAPAN vol. 014, no. 397 (C-0752), 28 August 1990 (1990-08-28) & JP 02 149431 A (HITACHI CHEM CO LTD), 8 June 1990 (1990-06-08) * abstract * --- | 1-16 | |
| X | PATENT ABSTRACTS OF JAPAN vol. 014, no. 143 (C-0703), 19 March 1990 (1990-03-19) & JP 02 014832 A (HITACHI CHEM CO LTD), 18 January 1990 (1990-01-18) * abstract * --- -/-- | 1-16 | |

The present search report has been drawn up for all claims

| Place of search | Date of completion of the search | Examiner |
|---|---|---|
| THE HAGUE | 27 September 2000 | Van Bommel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 30 4772

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 049 338 A (VARAPRASAD DESARAJU V ET AL) 17 September 1991 (1991-09-17)<br>* column 1, line 8 - column 2, line 5 *<br>--- | 1-16 | |
| X | US 5 011 669 A (TSUCHIYA KATSUYOSHI ET AL) 30 April 1991 (1991-04-30)<br>* column 1, line 7 - column 2, line 6 *<br>--- | 1-16 | |
| A | EP 0 905 093 A (LUCENT TECHNOLOGIES INC) 31 March 1999 (1999-03-31)<br>* paragraph ‘0003! - paragraph ‘0015! *<br>----- | 1-16 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 27 September 2000 | Van Bommel, L |

CATEGORY OF CITED DOCUMENTS

X : particularly relevant if taken alone
Y : particularly relevant if combined with another document of the sa category
A : technological backg: ound
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 4772

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2000

| Patent document cited in search report | Publication date | Patent family member(s) | Publication date |
|---|---|---|---|
| EP 0300610 A | 25-01-1989 | US 4775401 A | 04-10-1988 |
| | | AU 582508 B | 23-03-1989 |
| | | AU 1776588 A | 22-12-1988 |
| | | CA 1318130 A | 25-05-1993 |
| | | CN 1030221 A | 11-01-1989 |
| | | DE 3864100 A | 12-09-1991 |
| | | DK 333588 A | 31-03-1989 |
| | | JP 1018928 A | 23-01-1989 |
| | | JP 2690106 B | 10-12-1997 |
| US 4943542 A | 24-07-1990 | JP 1119523 A | 11-05-1989 |
| | | JP 1985135 C | 25-10-1995 |
| | | JP 7017387 B | 01-03-1995 |
| | | JP 1119525 A | 11-05-1989 |
| | | JP 2099887 C | 22-10-1996 |
| | | JP 8022750 B | 06-03-1996 |
| | | JP 1119527 A | 11-05-1989 |
| | | JP 1985136 C | 25-10-1995 |
| | | JP 7017388 B | 01-03-1995 |
| | | JP 1138143 A | 31-05-1989 |
| | | JP 2099899 C | 22-10-1996 |
| | | JP 8022751 B | 06-03-1996 |
| JP 01033021 A | 02-02-1989 | NONE | |
| JP 02149431 A | 08-06-1990 | JP 2504148 B | 05-06-1996 |
| JP 02014832 A | 18-01-1990 | NONE | |
| US 5049338 A | 17-09-1991 | NONE | |
| US 5011669 A | 30-04-1991 | JP 1797051 C | 28-10-1993 |
| | | JP 2196015 A | 02-08-1990 |
| | | JP 5004326 B | 19-01-1993 |
| EP 0905093 A | 31-03-1999 | US 6080339 A | 27-06-2000 |
| | | AU 8706598 A | 15-04-1999 |
| | | JP 11171558 A | 29-06-1999 |

EPO FORM P0459

For more details about this annex : see Official Journal of the European Patent Office, No. 12/82